# EUROPÄISCHE PATENTSCHRIFT

(11) **EP 3 426 814 B1**
(45) Veröffentlichungstag und Bekanntmachung des Hinweises auf die Patenterteilung: **29.04.2020**
(21) Anmeldenummer: 17718799.4
(22) Anmeldetag: 09.03.2017
(51) Int. Cl.: C22C 29/06, C22C 29/08, B22F 5/00

(54) **ZERSPANUNGSWERKZEUG**
MACHINING TOOL
OUTIL D'USINAGE PAR ENLÈVEMENT DE COPEAUX

(30) Priorität: 11.03.2016 AT 5316 U
(43) Veröffentlichungstag der Anmeldung: 16.01.2019
(73) Patentinhaber: Ceratizit Austria Gesellschaft m.b.H., 6600 Reutte (AT)
(72) Erfinder: TOUFAR, Christine, 6600 Reutte (AT); SCHLEINKOFER, Uwe, 6600 Reutte (AT)
(74) Vertreter: Ciesla, Dirk
(86) Internationale Anmeldenummer: PCT/AT2017/000011
(87) Internationale Veröffentlichungsnummer: WO 2017/152197

(56) Entgegenhaltungen:
- WO-A1-00/52217
- AT-U1- 15 143
- JP-A- 2004 181 604

## Beschreibung

Die vorliegende Erfindung betrifft ein Zerspanungswerkzeug für Metall enthaltende Werkstoffe und die Verwendung eines Hartmetalls für ein Zerspanungswerkzeug für Metall enthaltende Werkstoffe.

Für eine zerspanende Bearbeitung von Metall enthaltenden Werkstoffen, wie insbesondere Metallen und Metall enthaltenden Verbundwerkstoffen, kommen üblicherweise Zerspanungswerkzeuge aus Hartmetall zum Einsatz. Hartmetall ist ein Verbundwerkstoff, bei dem harte Teilchen, die insbesondere durch Metall-Karbide und -Karbonitride gebildet sein können, in einem duktilen metallischen Binder eingebettet ist. Am weitesten verbreitet ist dabei Hartmetall, bei dem die harten Teilchen zumindest überwiegend durch Wolframkarbid (WC) gebildet sind und der Binder eine Cobalt- oder Nickel-Basislegierung ist, insbesondere eine Cobalt-Basislegierung. Basislegierung eines Metalls bedeutet dabei, dass dieses Metall den Hauptbestandteil der Legierung bildet.

Als Zerspanungswerkzeuge kommen dabei sowohl Vollhartmetallwerkzeuge, bei denen ein Schneidenbereich einstückig mit dem Werkzeugschaft aus dem Hartmetall ausgebildet ist, als auch Werkzeuge mit auswechselbaren, an einem Werkzeuggrundkörper befestigten Schneideinsätzen aus Hartmetall zum Einsatz. Bei den Vollhartmetallwerkzeugen können gegebenenfalls auch verschiedene Bereiche aus unterschiedlichen Hartmetallsorten ausgebildet sein. Ferner werden die Zerspanungswerkzeuge oftmals auch mit einer Hartstoffbeschichtung versehen, die z.B. mittels eines PVD-Verfahrens (physical vapor deposition) oder eines CVD-Verfahrens (chemical vapor deposition) auf dem Hartmetall abgeschieden wird.

Im Bereich der Zerspanungswerkzeuge mit auswechselbaren Schneideinsätzen kommt für die Schneideinsätze teilweise bereits Hartmetall zum Einsatz, bei dem der metallische Binder durch eine Cobalt-Ruthenium-Legierung (Co-Ru-Legierung) gebildet ist. Neben Cobalt und Ruthenium kann die Co-Ru-Legierung dabei ferner auch noch weitere Elemente aufweisen. Es hat sich jedoch gezeigt, dass diese bekannten Hartmetalle noch nicht die für viele Zerspanungsanwendungen gewünschte Kombination aus einer hohen Warmfestigkeit, einer feinen Korngröße der Wolframkarbidkörner und einer hohen Risszähigkeit aufweisen.

WO 00/52217 A1 beschreibt ein Zerspanungswerkzeug für die Holzbearbeitung nach dem Oberbegriff von Anspruch 1 und eine Verwendung eines Hartmetalls nach dem Oberbegriff von Anspruch 12.

Es ist Aufgabe der vorliegenden Erfindung, ein verbessertes Zerspanungswerkzeug für Metall enthaltende Werkzeuge und eine entsprechende verbesserte Verwendung eines Hartmetalls für ein Zerspanungswerkzeug für Metall enthaltende Werkstoffe bereitzustellen, mit denen insbesondere eine verbesserte Kombination aus hoher Warmfestigkeit, feiner Korngröße und hoher Risszähigkeit erzielt werden.

Die Aufgabe wird gelöst durch ein Zerspanungswerkzeug für Metall enthaltende Werkstoffe nach Anspruch 1. Vorteilhafte Weiterbildungen sind in den abhängigen Ansprüchen angegeben.

Unter dem (Co + Ru)-Gehalt ist dabei vorliegend der Gesamtgehalt (in Gew.-%) an Cobalt und Ruthenium in dem Hartmetall zu verstehen, der sich durch Addition des Co-Gehaltes (Cobalt-Gehaltes) in Gew.-% und des Ru-Gehaltes (Ruthenium-Gehaltes) in Gew.-% ergibt. Mit dem Ru-Gehalt in der angegebenen Bandbreite kann insbesondere eine hohe Warmfestigkeit erreicht werden. Bei einem Ru-Gehalt unterhalb von ca. 6 Gew.-% des Gesamtbindergehaltes (d.h. des (Co + Ru)-Gehalts) wird keine ausreichende Verbesserung der Warmfestigkeit erreicht, wohingegen bei einem zu hohen Ru-Gehalt oberhalb von ca. 16 Gew.-% des (Co + Ru)-Gehaltes eine negative Beeinflussung der Gefügeeigenschaften auftritt. Es hat sich gezeigt, dass sich eine gezielte Zugabe von Molybdän besonders vorteilhaft auf die Eigenschaften des Hartmetalls auswirkt, insbesondere eine besonders vorteilhafte Kombination aus feiner Korngröße des WC und hoher Risszähigkeit ermöglicht. Das Molybdän kann dabei insbesondere in Form von Mo₂C (Molybdänkarbid) zugegeben sein, es ist jedoch z.B. auch eine Zugabe als metallisches Molybdän möglich. Die Zugabe von Molybdän in den angegebenen Mengen hat sich als besonders vorteilhaft herausgestellt. Bei einer Mo-Zugabe in größeren Mengen von mehr als 3,0 Gew.-% ist zumindest keine weitere Verbesserung der Eigenschaften des Hartmetalls zu beobachten. Um eine hohe Härte zu erreichen, kann es vorteilhaft sein, in geringen Mengen Vanadium insbesondere in Form von VC (Vanadiumkarbid) hinzuzugeben, wobei allerdings der V-Gehalt ca. 0,3 Gew.-% des Hartmetalls nicht überschreiten sollte, um eine Versprödung und somit Absenkung der Risszähigkeit zu vermeiden. Bevorzugt sollte der V-Gehalt kleiner als 0,2 Gew.-% des Hartmetalls sein. Je nach gewünschten Eigenschaften des resultierenden Hartmetalls kann es vorteilhaft sein, auch geringe Mengen an Ti, Ta und/oder Nb hinzuzugeben, wobei die Zugabe insbesondere in Form von TiC, TaC, NbC oder in Form von Mischkarbiden erfolgen kann. Um die über den angegebenen Ru-Gehalt und Mo-Gehalt erreichten Eigenschaftsverbesserungen nicht zu gefährden, ist es jedoch wichtig, den Ti-Gehalt, den Ta-Gehalt und den Nb-Gehalt jeweils zumindest kleiner als 0,2 Gew.-% des Hartmetalls zu halten, bevorzugt jeweils kleiner als 0,15 Gew.-% des Hartmetalls. Das Zerspanungswerkzeug für Metall enthaltende Werkstoffe kann dabei z.B. als ein sogenanntes Vollhartmetallwerkzeug ausgebildet sein, bei dem der für die Zerspanung ausgebildete Schneidenbereich einstückig mit einem Schaft aus Hartmetall ausgebildet ist. Dabei können aber z.B. auch Bereiche mit verschiedenem Hartmetall zum Einsatz kommen, z.B. der Schneidenbereich eine andere Hartmetallsorte als der Schaftbereich aufweisen. Das Zerspanungswerkzeug kann aber z.B. auch als ein auswechselbarer Schneideinsatz ausgebildet sein, der dazu ausgebildet ist, an einem entsprechenden Werkzeughalter befestigt zu werden. Ferner kann das Grundmaterial aus Hartmetall bei dem Zerspanungswerkzeug für Metall enthaltende Werkstoffe gegebenenfalls auch noch in an sich bekannter Weise mit einer Hartstoffbeschichtung versehen sein, die insbesondere z.B. mittels eines CVD-Verfahrens (chemical vapor deposition) oder eines PVD-Verfahrens (physical vapor deposition) ausgebildet sein kann. Mit dem erfindungsgemäßen Zerspanungswerkzeug für Metall enthaltende Werkstoffe wird eine besonders vorteilhafte Kombination aus hoher Warmfestigkeit, feiner Korngröße und hoher Risszähigkeit bereitgestellt, die sich insbesondere auch für eine zerspanende Bearbeitung von schwer zerspanbaren Materialien wie insbesondere hochlegierten Stählen, Titanlegierungen und Superlegierungen eignet. Die Zusammensetzung des Grundmaterials kann insbesondere durch Elementanalyse mittels RFA (Röntgenfluoreszenz-Analyse) bestimmt werden.

Gemäß einer Weiterbildung weist das Hartmetall einen Mo-Gehalt im Bereich von 0,15 - 2,5 Gew.-% vom Hartmetall auf. Ab einem Mo-Gehalt von ca. 0,15 Gew.-% vom Hartmetall treten die positiven Wirkungen des Mo besonders deutlich hervor. Eine Zugabe von mehr als 2,5 Gew.-% vom Hartmetall ist ferner auch unter Kostengesichtspunkten nachteilig.

Gemäß einer Weiterbildung beträgt die mittlere Korngröße des Wolframkarbids 0,15 µm - 0,9 µm. Es hat sich gezeigt, dass sich insbesondere bei solchen Korngrößen in Verbindung mit der angegebenen Zusammensetzung des Hartmetalls eine vorteilhafte Kombination aus Härte, Risszähigkeit und Warmfestigkeit ergibt, die neben einer Verwendung in auswechselbaren Schneideinsätzen auch eine Verwendung als Vollhartmetallwerkzeug ermöglicht.

Gemäß einer Weiterbildung weist das Hartmetall ferner einen Cr-Gehalt im Bereich von 0 - 7,5 Gew.-% des (Co + Ru)-Gehalts aufweist, bevorzugt von 2 - 7,5 Gew.-%.

Um ein unerwünschtes Kornwachstum der WC-Körner während des Sinterns zuverlässig zu unterdrücken und somit eine gewünschte gleichmäßige geringe Korngröße der Wolframkarbidkörner zu erhalten, ist die Zugabe von Cr als Kornwachstumshemmer in einer Menge von zumindest 2 Gew.-% des (Co + Ru)-Gehaltes vorteilhaft. Da das Cr bis zu einem gewissen Prozentsatz in dem Binder löslich ist, wird der Cr-Gehalt sinnvollerweise auf den Bindergehalt des Hartmetalls bezogen, d.h. auf den (Co + Ru)-Gehalt. Andererseits muss der Cr-Gehalt ausreichend niedrig unterhalb von ca. 7,5 Gew.-% des (Co + Ru)-Gehaltes gehalten werden, um die Benetzung der Wolframkarbidkörner durch das Cobalt nicht nachteilig zu beeinflussen.

Bevorzugt ist der Cr-Gehalt kleiner als der Ru-Gehalt. Insbesondere beträgt der Cr-Gehalt bevorzugt weniger als die Hälfte des Ru-Gehalts. In diesem Fall wird zuverlässig erreicht, dass einerseits die gewünschte Erhöhung der Warmfestigkeit eintritt und eine relativ kleine mittlere Korngröße der Wolframkarbidkörner erzielt wird, andererseits aber die Benetzung der Wolframkarbidkörner durch den Binder nicht unnötig nachteilig beeinflusst wird und Ausscheidungen von Chromkarbid vermieden werden.

Gemäß einer Weiterbildung beträgt der Ru-Gehalt 8-14 Gew.-% des (Co + Ru)-Gehalts. In diesem Fall wird durch den relativ hohen Ru-Gehalt zuverlässig eine deutliche Erhöhung der Warmfestigkeit erreicht und andererseits auch zuverlässig ein zu hoher Ru-Gehalt verhindert, der sich negativ auf die Gefügeeigenschaften auswirken würde.

Gemäß einer Weiterbildung beträgt der Gehalt von Ti, Ta und/oder Nb je von 0-0,15 Gew.-%. Mit anderen Worten kann z.B. keines von Ti, Ta und Nb, in dem Hartmetall enthalten sein, es können jedoch auch nur eines von Ti, Ta und Nb, zwei von Ti, Ta und Nb oder alle drei in einer Menge bis zu jeweils 0,15 Gew.-% in dem Hartmetall enthalten sein. In dieser Weise lassen sich einerseits über gezielte Zugabe der Elemente die Eigenschaften des Hartmetalls zusätzlich beeinflussen, andererseits ermöglicht dieser Gehalt an Ti, Ta und/oder Nb auch die Verwendung von Ausgangmaterialien, die bereits in geringen Mengen Ti, Ta und/oder Nb aufweisen, z.B. durch einen Recycling-Prozess rückgewonnenes Hartmetallpulver.

Bevorzugt beträgt der Gesamtgehalt von (Ti + Ta + Nb) zwischen 0 und 0,2 Gew.-% des Hartmetalls, mehr bevorzugt zwischen 0 und 0,15 Gew.-%. In diesem Fall sind die zusätzlichen Gesamtmengen an Ti, Ta und Nb so gering gehalten, dass eine negative Beeinflussung der über den Ru-Gehalt und den Mo-Gehalt sowie gegebenenfalls den Cr-Gehalt erzielten positiven Wirkungen verhindert ist.

Gemäß einer bevorzugten Weiterbildung weist das Hartmetall einen WC-Gehalt im Bereich von 80 - 95 Gew.-% auf.

Gemäß einer Weiterbildung kann das Grundmaterial des Zerspanungswerkzeugs ferner mit einer CVD- oder PVD-Hartstoffbeschichtung versehen sein. In diesem Fall können die Eigenschaften des Zerspanungswerkzeugs noch besser an die Bedingungen bei der Bearbeitung des Metall enthaltenden Werkstoffs angepasst werden. Es ist jedoch zu beachten, dass sich je nach zu bearbeitendem Werkstoff auch eine Bearbeitung ohne weitere Hartstoffbeschichtung als vorteilhaft erweisen kann.

Gemäß einer Weiterbildung ist das Zerspanungswerkzeug als ein Vollhartmetallwerkzeug mit einem einstückig mit einem Schaft ausgebildeten Schneidenbereich ausgebildet. Die über die angegebene Zusammensetzung erzielbare Kombination von hoher Warmfestigkeit, großer Härte und gleichzeitig relativ hoher Risszähigkeit hat sich insbesondere für derartige Zerspanungswerkzeuge als besonders vorteilhaft herausgestellt.

Die Aufgabe wird auch durch eine Verwendung eines Hartmetalls für ein Zerspanungswerkzeug für Metall enthaltende Werkstoffe nach Anspruch 12 gelöst. Vorteilhafte Weiterbildungen sind in den abhängigen Ansprüchen angegeben.

Mit dieser Verwendung des Hartmetalls wird eine besonders vorteilhafte Kombination aus hoher Warmfestigkeit, feiner Korngröße und hoher Risszähigkeit erzielt, die sich insbesondere auch für eine zerspanende Bearbeitung von schwer zerspanbaren Materialien wie insbesondere hochlegierten Stählen, Titanlegierungen und Superlegierungen eignet.

Gemäß einer Weiterbildung weist das Hartmetall einen Cr-Gehalt von 2-7,5 Gew.-% des (Co + Ru)-Gehalts auf. Als Ausgangspulver zur Einstellung des Cr-Gehalts kann insbesondere Cr₃C₂-Pulver zum Einsatz kommen. Es ist jedoch z.B. auch eine Zugabe als Chromnitrid-Pulver, Chromkarbonitrid-Pulver oder in anderer Weise in entsprechenden Mengen möglich. Die Zugabe von Chrom in den angegebenen Mengen hat sich als besonders vorteilhaft herausgestellt.

Weitere Vorteile und Zweckmäßigkeiten der Erfindung ergeben sich anhand der nachfolgenden Beschreibung von Ausführungsbeispielen unter Bezugnahme auf die beigefügten Figuren.

Von den Figuren zeigen:
- Fig. 1a) und b): schematische Darstellungen von einem Zerspanungswerkzeug für Metall enthaltende Werkstoffe gemäß einer ersten Ausführungsform;
- Fig. 2: eine schematische Darstellung eines Zerspanungswerkzeugs für Metall enthaltende Werkstoffe gemäß einer zweiten Ausführungsform mit einem Werkzeuggrundkörper, der diesen aufnimmt;
- Fig. 3:: eine elektronenmikroskopische Aufnahme mit 10.000-facher Vergrößerung eines Grundmaterials aus Hartmetall für ein Zerspanungswerkzeug für Metall enthaltende Werkstoffe gemäß einem ersten Beispiel einer Ausführungsform; und
- Fig. 4:: eine elektronenmikroskopische Aufnahme mit 10.000-facher Vergrößerung eines Grundmaterials aus Hartmetall für ein Zerspanungswerkzeug für Metall enthaltende Werkstoffe gemäß einem zweiten Beispiel einer Ausführungsform.

### AUSFÜHRUNGSFORMEN

### ERSTE AUSFÜHRUNGSFORM

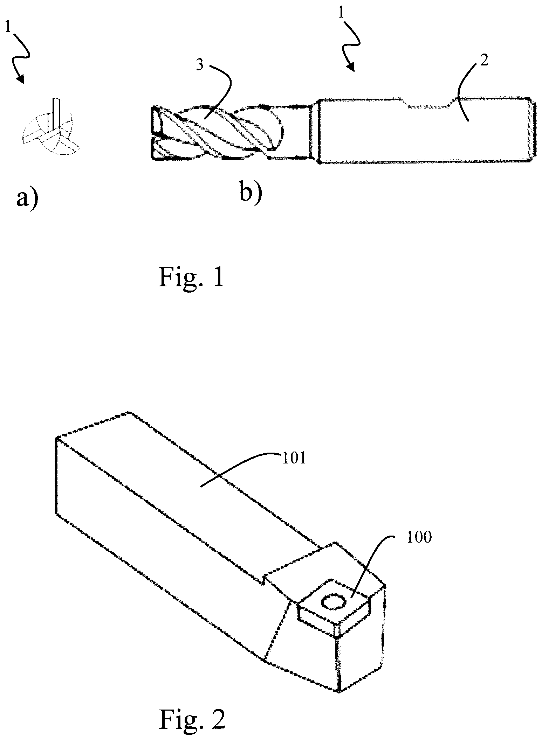

Eine erste Ausführungsform eines Zerspanungswerkzeugs 1 für Metall enthaltende Werkstoffe ist in Fig. 1 a) und Fig. 1 b) schematisch dargestellt, wobei Fig. 1 a) eine schematische Stirnansicht entlang einer Längsachse des des Zerspanungswerkzeugs 1 ist und Fig. 1 b) eine schematische Seitenansicht in einer Richtung senkrecht zu der Längsachse ist.

Wie in den Fig. 1 a) und Fig. 1 b) zu sehen ist, ist das Zerspanungswerkzeug 1 für Metall enthaltende Werkstoffe gemäß der ersten Ausführungsform als ein Vollhartmetallwerkzeug mit einem einstückig mit einem Schaft 2 ausgebildeten Schneidenbereich 3 ausgebildet. Obwohl das Zerspanungswerkzeug 1 für Metall enthaltende Werkstoffe in den Fig. 1 a) und Fig. 1 b) als Fräser ausgebildet ist, ist es z.B. auch möglich, das Vollhartmetallwerkzeug für andere Zerspanungsvorgänge auszubilden, wie z.B. als Bohrer, Reibahle, Entgrater, etc.

Das Zerspanungswerkzeug 1 weist ein Grundmaterial aus Hartmetall 4 auf, das in einen duktilen metallischen Binder 5 eingebettete Hartstoffteilchen 6 aufweist. Der metallische Binder 5 ist eine Co-Ru-Legierung, die aber neben Cobalt und Ruthenium noch andere Legierungselemente aufweist, wie weiter unten noch erläutert wird. Die Hartstoffteilchen 6 sind zumindest überwiegend durch Wolframkarbid gebildet, wobei die WC-Körner eine mittlere Korngröße im Bereich von 0,1 µm bis 1,2 µm haben. Neben den WC-Körnern können in geringeren Mengen noch weitere Hartstoffteilchen, wie z.B. TiC, TaC, NbC, etc. vorliegen. Das Hartmetall weist einen Gesamtgehalt an Cobalt und Ruthenium ((Co + Ru)-Gehalt) von 5-17 Gew.-% des Hartmetalls auf, wobei der Ru-Gehalt zwischen 6 und 16 Gew.-% des (Co + Ru)-Gehalts beträgt. Das Hartmetall weist ferner einen Molybdän-Gehalt im Bereich von 0,1 - 3,0 Gew.-% des Hartmetalls auf. Ein Gehalt von Ti, Ta und Nb ist jeweils kleiner als 0,2 Gew.-% des Hartmetalls und ein Vanadiumgehalt ist ebenfalls kleiner als 0,3 Gew.-%, bevorzugt kleiner als 0,2 Gew.-%. Bevorzugt kann das Hartmetall ferner noch Chrom aufweisen, wobei ein Chrom-Gehalt bevorzugt im Bereich von 2 bis 7,5 Gew.-% des (Co + Ru)-Gehalts liegt. Die Herstellung des Zerspanungswerkzeugs 1 erfolgt in einem pulvermetallurgischen Herstellungsverfahren, wie anschließend noch mit Bezug auf konkrete Beispiele beschrieben wird. Obwohl bei der Ausführungsform eine einstückige Ausbildung aus einem einzigen Hartmetall vorliegt, ist es z.B. auch möglich, verschiedene Bereiche des Zerspanungswerkzeugs 1 aus unterschiedlichen HartmetallSorten auszubilden.

### ZWEITE AUSFÜHRUNGSFORM

In Fig. 2 ist schematisch eine zweite Ausführungsform eines Zerspanungswerkzeugs 100 für Metall enthaltende Werkstoffe dargestellt. Das Zerspanungswerkzeug 100 gemäß der zweiten Ausführungsform ist als ein auswechselbarer Schneideinsatz ausgebildet, der dazu ausgebildet ist, an einem Werkzeuggrundkörper 101 befestigt zu werden.

Obwohl in Fig. 2 schematisch als Zerspanungswerkzeug 100 ein Schneideinsatz für eine Drehbearbeitung dargestellt ist, kann der Schneideinsatz auch für eine andere Bearbeitungsart ausgebildet sein, z.B. zum Fräsen, Bohren, etc. Obwohl der konkret dargestellte Schneideinsatz zur Befestigung mittels einer Befestigungsschraube ausgebildet ist, ist auch eine Ausgestaltung zur Befestigung in anderer Weise möglich, z.B. für eine Befestigung mittels einer Spannklemme, eines Klemmkeils, etc.

Auch das Zerspanungswerkzeug 100 gemäß der zweiten Ausführungsform weist ein Grundmaterial aus Hartmetall 4 auf, wie es mit Bezug auf die erste Ausführungsform beschrieben wurde.

### BEISPIELE

Die Herstellung der Hartmetalle als Grundmaterial für eine Zerspanungswerkzeug für Metall enthaltende Werkstoffe gemäß den nachfolgenden Beispielen erfolgte jeweils in einem pulvermetallurgischen Herstellungsverfahren, wobei jeweils in einem ersten Schritt die Ausgangspulver miteinander vermischt wurden, d.h. WC-Pulver, Co-Pulver, Ru-Pulver, Mo₂C-Pulver sowie ggfs. Cr₃C₂-Pulver und/oder VC-Pulver. Bei den Vergleichsbeispielen, die jeweils kein Ruthenium enthalten, kam entsprechend kein Ru-Pulver zum Einsatz.

Als Co-Pulver wurde ein Pulver mit einer mittleren Partikelgröße im Bereich zwischen 0,6 und 1,8 µm verwendet, im Speziellen mit einer mittleren Partikelgröße von ca. 0,8 µm (FSSS 1 µm). Als Ru-Pulver wurde ein Pulver mit einer relativ großen mittleren Partikelgröße von ca. 38,5 µm verwendet, das zur Verfügung stand, es können aber z.B. auch andere Ru-Pulver mit Partikelgrößen zwischen < 1 µm und 95 µm ohne weiteres zum Einsatz kommen. Ferner wurde Cr₃C₂-Pulver mit einer mittleren Partikelgröße im Bereich von ca. 1 - 2 µm verwendet. Das verwendete WC-Pulver hatte für die eine mittlere Partikelgröße im Bereich von 0,3 - 2,5 µm, im speziellen Fall ca. 0,8 µm. Das verwendete Mo₂C-Pulver wies eine mittlere Partikelgröße von ca. 2 µm auf. Es kam ein VC-Pulver mit einer mittleren Partikelgröße von ca. 1 µm zum Einsatz.

Bei den Versuchen wurde das Pulvergemisch unter Beigabe von einem Diethylether aufweisenden Mahlmedium und üblichen Presshilfsmitteln (z.B. Paraffinwachs) für ca. 3 Stunden in einem Attritormahlwerk gemahlen. Die so erhaltene Suspension wurde anschließend in an sich bekannter Weise in einem Sprühturm sprühgetrocknet.

Anschließend wurden bei dem Versuchen stabförmige Grünkörper durch Drybag-Pressen erzeugt. Die derart erzeugten Grünkörper für Werkzeugrohlinge wurden anschließend bei 1430 °C in einem Sinter-HIP-Verfahren (HIP = Heißisostatisches Pressen) verdichtet.

Aus einem Teil der in dieser Weise gefertigten Werkzeugrohlinge wurden durch Schleifbearbeitung in an sich bekannter Weise Vollhartmetallfräser als Zerspanungswerkzeuge 1 für Metall enthaltende Werkstoffe gefertigt, mit denen dann Zerspanungsversuche durchgeführt wurden.

Ferner wurden bei einem Teil der Beispiele die bei dem Mahlen erzeugte Suspension auch sprühgetrocknet und das derart erzeugte Granulat in einer Matrizenpresse zu Grünlingen für auswechselbare Schneideinsätze kompaktiert. Auch diese Grünlinge für auswechselbare Schneideinsätze wurden anschließend in entsprechender Weise gesintert, um auswechselbare Schneideinsätze als Zerspanungswerkzeuge 100 für Metall enthaltende Werkstoffe zu erzeugen.

Obwohl oben eine Herstellung mit einem Mahlen unter Zugabe eines organischen Lösungsmittels und anschließendem Sprühtrocknen beschrieben wurde, ist es z.B. auch möglich, als Mahlmedium anstelle des organischen Lösungsmittels Wasser zu verwenden, wie in dem technischen Gebiet der pulvermetallurgischen Herstellung von Hartmetallen bekannt ist. Ferner können neben dem beschriebenen Drybag-Pressen auch die anderen in diesem Gebiet üblichen Formgebungsverfahren, wie insbesondere Strangpressen oder Matrizenpressen, zum Einsatz kommen. Zur Einstellung der Kohlenstoffbilanz des Werkzeugrohlings kann ferner in an sich bekannter Weise in geringen Mengen Ruß oder Wolfram hinzudosiert werden. Anstelle des in den Versuchen verwendeten Cr₃C₂-Pulvers kann ferner z.B. auch Chromnitrid-Pulver oder Chromkarbonitrid-Pulver in entsprechenden Mengen zum Einsatz kommen. Anstelle des bei den Versuchen verwendeten Mo₂C-Pulvers kann ferner auch metallisches Mo-Pulver zur Anwendung kommen. Anstelle des Trocknens der erhaltenen Suspension nach dem Mahlvorgang durch Sprühtrocknen in einem Sprühturm kamen bei einigen Beispielen auch ein Trocknen in einem Rotationsverdampfer und ein anschließendes Absieben mit einem Sieb mit 250 µm Maschenweite zum Einsatz.

Es ist zu beachten, dass in der obigen Beschreibung der Gehalt der Bestandteile des Hartmetalls teilweise auf das gesamte Hartmetall bezogen ist und teilweise nur auf den (Co + Ru)-Gehalt. Ferner wird in der obigen Beschreibung oftmals auf den Gehalt der jeweiligen Metalle Cr, Mo, etc. Bezug genommen. Bei der folgenden Beschreibung von Herstellungsbeispielen (und auch in Tabelle 1), bei denen die resultierende Zusammensetzung durch die Anteile der jeweiligen Ausgangsmaterialien bestimmt wurde, sind hingegen generell die Anteile in Gewichtsprozent am Hartmetall ausgedrückt. Die auf 100% fehlenden Gewichtsprozent entfallen dabei jeweils auf Wolframkarbid.

### BEISPIEL 1

Es wurde ein Hartmetall als Grundmaterial für ein Zerspanungswerkzeug für Metall enthaltende Werkstoffe mit der folgenden Zusammensetzung hergestellt.

Das Hartmetall gemäß Beispiel 1 weist einen Co-Gehalt von 10 Gew.-% des Hartmetalls, einen Ru-Gehalt von 1,5 Gew.-% und einen über die Zugabe von 0,6 Gew.-% Mo₂C-Pulver eingestellten Mo-Gehalt auf, Rest Wolframkarbid (WC). Die Herstellung des Hartmetalls erfolgte in einem pulvermetallurgischen Verfahren. Es resultieren somit: ein (Co + Ru)-Gehalt von 11,5 Gew.-% des Hartmetalls, ein Ru-Gehalt von ca. 13 Gew.-% des (Co + Ru)-Gehaltes und ein Mo-Gehalt von ca. 0,56 Gew.-% des Hartmetalls.

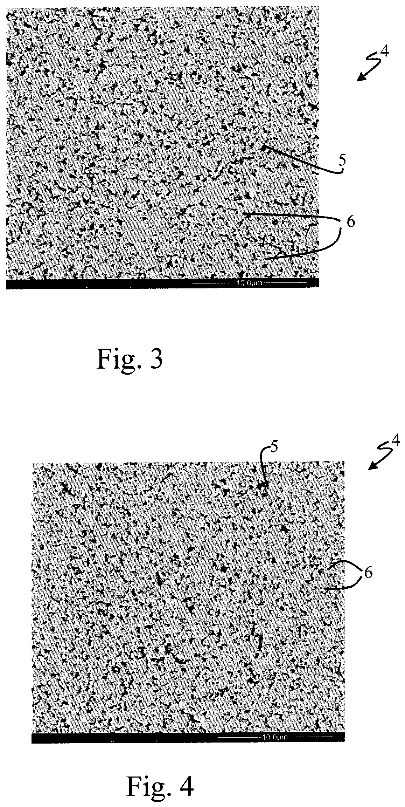

Bei der Probe wurde die Härte über eine Vickershärte-Messung (HV30) bestimmt und es wurde die Risszähigkeit K_{lc} (Shetty) bestimmt. Zur Überprüfung der Kohlenstoffbilanz und der resultierenden Korngröße wurden ferner in an sich bekannter Weise die magnetische Koerzitivfeldstärke Hc und die Sättigungsmagnetisierung 4πσ bestimmt. Die Korngröße wurde ferner als "linear intercept length", gemäß dem internationalen Standard ISO 4499-2:2008(E) gemessen. Als Grundlage dienten EBSD-Aufnahmen an polierten Schliffen. Die Messmethodik an solchen Aufnahmen ist z.B. beschrieben in: K.P. Mingard et al., "Comparison of EBSD and conventional methods of grain size measurement of hard metals", Int. Journal of Refractory Metals & Hard Materials 27 (2009) 213-223". Die ermittelten Werte sind unten in Tabelle 2 zusammengefasst. Eine elektronenmikroskopische Aufnahme eines Schliffes der Probe gemäß Beispiel 1 mit 10.000-facher Vergrößerung ist in Fig. 3 zu sehen.

### BEISPIEL 2

Analog zu der Herstellung des in Beispiel 1 beschriebenen Hartmetalls wurde in einem zweiten Beispiel ein Hartmetall mit einem Co-Gehalt von 10 Gew.-%, einem Ru-Gehalt von 1,5 Gew.-%, einem über die Zugabe von 0,6 Gew.-% Cr₃C₂-Pulver eingestellten Cr-Gehalt und zusätzlich einem über die Zugabe von 0,6 Gew.-% Mo₂C eingestellten Mo-Gehalt, Rest Wolframkarbid (WC), hergestellt. Es resultieren somit: ein (Co + Ru)-Gehalt von 11,5 Gew.-% des Hartmetalls, ein Ru-Gehalt von ca. 13 Gew.-% des (Co + Ru)-Gehaltes, ein Cr-Gehalt von ca. 4,5 Gew.-% des (Co + Ru)-Gehaltes und ein Mo-Gehalt von ca. 0,56 Gew.-% des Hartmetalls.

Es wurden wiederum die in Tabelle 2 zusammengefassten Messgrößen ermittelt. Eine elektronenmikroskopische Aufnahme mit 10.000-facher Vergrößerung der Probe gemäß Beispiel 2 ist in Fig. 4 dargestellt. Es zeigt sich aus dem Vergleich mit Beispiel 1, dass sich der zusätzliche Cr-Gehalt bei im Wesentlichen gleichbleibender Risszähigkeit positiv auf die Härte ausgewirkt hat.

### VERGLEICHSBEISPIEL 1

Als Vergleichsbeispiel 1 wurde in analoger Weise ein Hartmetall mit einem Co-Gehalt von 11,5 Gew.-%, einem über die Zugabe von 0,6 Gew.-% Mo₂C-Pulver eingestellten Mo-Gehalt, Rest Wolframkarbid (WC), hergestellt.

Auch zu diesem Vergleichsbeispiel 1 wurden die in Tabelle 2 zusammengestellten Messgrößen ermittelt.

Ein Vergleich der in Tabelle 2 zusammengefassten Ergebnisse zeigt, dass nur eine deutlich geringere Härte erzielt wurde.

### BEISPIEL 3

Analog zu dem zuvor beschriebenen Herstellungsverfahren wurde ferner ein weiteres Hartmetall mit einem höheren Mo-Gehalt wie folgt: 10 Gew.-% Co, 1,5 Gew.-% Ru, 1,2 Gew.-% Mo₂C. Es resultieren somit: ein (Co + Ru)-Gehalt von 11,5 Gew.-% des Hartmetalls, ein Ru-Gehalt von ca. 13 Gew.-% des (Co + Ru)-Gehaltes und ein Mo-Gehalt von ca. 1,1 Gew.-% des Hartmetalls.

Die ermittelten Messwerte sind aus Tabelle 2 ersichtlich.

### VERGLEICHSBEISPIEL 2

In analoger Weise wurde als Vergleichsbeispiel 2 ein Hartmetall wie folgt hergestellt: 10 Gew.-% Co, 1,5 Gew.-% Ru, Rest WC.

Wie aus Tabelle 2 ersichtlich ist, wurde in diesem Fall nur eine deutlich geringere Risszähigkeit erreicht.

### BEISPIEL 4

Als Beispiel 4 wurde ferner ein Hartmetall als Grundmaterial für ein Zerspanungswerkzeug für Metall enthaltende Werkstoffe mit den folgenden Ausgangsmaterialien hergestellt: 8,7 Gew.-% Co, 1,3 Gew.-% Ru, 0,6 Gew.-% Cr₃C₂, 0,3 Gew.-% Mo₂C. Es resultieren somit: ein (Co + Ru)-Gehalt von 10 Gew.-% des Hartmetalls, ein Ru-Gehalt von ca. 13 Gew.-% des (Co + Ru)-Gehaltes, ein Cr-Gehalt von ca. 5,2 Gew.-% des (Co + Ru)-Gehaltes und ein Mo-Gehalt von ca. 0,28 Gew.-% des Hartmetalls.

Wie aus den ermittelten Werten aus Tabelle 2 ersichtlich ist, wird erwartungsgemäß mit dem geringeren Gesamt-Bindergehalt (Co + Ru) eine deutlich größere Härte erreicht, überraschenderweise ist aber die damit einhergehende Abschwächung der Risszähigkeit nur relativ gering.

### VERGLEICHSBEISPIEL 3

Als Vergleichsbeispiel 3 wurde ferner ein Ruthenium-freies Hartmetall untersucht, das einen Co-Gehalt von 10 Gew.-% und eine zu Beispiel 4 vergleichbare Menge an Mo und Cr aufweist.

Wie aus Tabelle 4 ersichtlich ist, wurde bei Beispiel 4 eine deutlich größere Härte HV30 erzielt als bei diesem Vergleichsbeispiel 3.

### BEISPIEL 5

Als Beispiel 5 wurde mit einem entsprechenden Herstellungsverfahren ein Hartmetall als Grundmaterial für ein Zerspanungswerkzeug für Metall enthaltende Werkstoffe mit den folgenden Ausgangsmaterialien hergestellt: 5,5 Gew.-% Co, 0,8 Gew.-% Ru, 0,4 Gew.-% Cr₃C₂, 0,2 Gew.-% Mo₂C. Es resultieren somit: ein (Co + Ru)-Gehalt von 6,3 Gew.-% des Hartmetalls, ein Ru-Gehalt von ca. 13 Gew.-% des (Co + Ru)-Gehaltes, ein Cr-Gehalt von ca. 5,5 Gew.-% des (Co + Ru)-Gehaltes und ein Mo-Gehalt von ca. 0,19 Gew.-% des Hartmetalls.

Wie aus Tabelle 2 ersichtlich ist, resultiert aus dem deutlich geringeren Gesamt-Bindergehalt (Co + Ru) eine deutliche Erhöhung der Härte, wobei überraschenderweise eine nur vergleichsweise geringe Absenkung der Risszähigkeit zu beobachten ist.

### BEISPIEL 6

Ein Hartmetall als Grundmaterial für ein Zerspanungswerkzeug für Metall enthaltende Werkstoffe wurde als Beispiel 6 aus den folgenden Ausgangsmaterialien hergestellt: 13 Gew.-% Co, 1,9 Gew.-% Ru, 1,2 Gew.-% Cr₃C₂, 0,8 Gew.-% Mo₂C. Es resultieren somit: ein (Co + Ru)-Gehalt von 14,9 Gew.-% des Hartmetalls, ein Ru-Gehalt von ca. 13 Gew.-% des (Co + Ru)-Gehaltes, ein Cr-Gehalt von ca. 7 Gew.-% des (Co + Ru)-Gehaltes und ein Mo-Gehalt von ca. 0,75 Gew.-% des Hartmetalls.

**TABELLE 1**

| | **Co [Gew.-%]** | **Ru [Gew.-%]** | **Cr₃C₂ [Gew.-%]** | **Mo₂C [Gew.-%]** | **VC [Gew.-%]** |
|---|---|---|---|---|---|
| **Beispiel 1** | 10 | 1,5 | - | 0,6 | - |
| **Beispiel 2** | 10 | 1,5 | 0,6 | 0,6 | - |
| **Vergleichsbeispiel 1** | 11,5 | - | - | 0,6 | - |
| **Beispiel 3** | 10 | 1,5 | - | 1,2 | |
| **Vergleichsbeispiel 2** | 10 | 1,5 | - | - | - |
| **Beispiel 4** | 8,7 | 1,3 | 0,6 | 0,3 | - |
| **Vergleichsbeispiel 3** | 10 | - | 0,6 | 0,3 | 0,1 |
| **Beispiel 5** | 5,5 | 0,8 | 0,4 | 0,2 | - |
| **Beispiel 6** | 13 | 1,9 | 1,2 | 0,8 | - |

**TABELLE 2**

| | **mittl. WC-Korngröße [µm]** | **HV30** | **Risszähigkeit K_{lc} [MPa√m]** |
|---|---|---|---|
| **Beispiel 1** | 0,35 | 1566 | 10,7 |
| **Beispiel 2** | 0,31 | 1636 | 10,8 |
| **Vergleichsbeispiel 1** | 0,44 | 1434 | 11,4 |
| **Beispiel 3** | 0,32 | 1561 | 10,9 |
| **Vergleichsbeispiel 2** | 0,44 | 1562 | 10,1 |
| **Beispiel 4** | 0,33 | 1697 | 10,4 |
| **Vergleichsbeispiel 3** | 0,36 | 1600 | 10,4 |
| **Beispiel 5** | 0,34 | 1918 | 9,6 |
| **Beispiel 6** | 0,30 | 1536 | 11,4 |

In Tabelle 1 sind die Zusammensetzungen der jeweiligen Beispiele und Vergleichsbeispiele in Gewichtsprozent des Hartmetalls zusammengefasst, wobei der Rest zu 100 % jeweils durch WC gebildet ist. In der Tabelle 2 sind die ermittelten Messwerte zu den jeweiligen Beispielen und Vergleichsbeispielen zusammengefasst.

## Patentansprüche

1. Zerspanungswerkzeug (1; 100),
mit einem Grundmaterial aus Hartmetall (4), das in einen duktilen metallischen Binder (5) eingebettete Hartstoffteilchen (6) aufweist, wobei der metallische Binder (5) eine Co-Ru-Legierung ist,
die Hartstoffteilchen (6) zumindest überwiegend durch Wolframkarbid gebildet sind, mit einer mittleren Korngröße des Wolframkarbids von 0,1 - 1,2 µm gemessen als "linear intercept length" gemäß dem internationalen Standard ISO 4499-2:2008(E),
mit einem Mo-Gehalt im Bereich von 0,1 - 3,0 Gew.-% des Hartmetalls, einem Gehalt von Ti, Ta und/oder Nb von je < 0,2 Gew.-% des Hartmetalls, und
einem V-Gehalt von < 0,3 Gew.-% des Hartmetalls, bevorzugt < 0,2 Gew.-%,
**dadurch gekennzeichnet, dass** es ein Zerspanungswerkzeug für Metall enthaltende Werkstoffe ist und
einen (Co + Ru)-Gehalt von 5-17 Gew.-% des Hartmetalls sowie einen Ru-Gehalt von 6-16 Gew.-% des (Co + Ru)-Gehalts aufweist.

2. Zerspanungswerkzeug nach Anspruch 1, wobei das Hartmetall (4) einen Mo-Gehalt im Bereich von 0,15 - 2,5 Gew.-% vom Hartmetall aufweist.

3. Zerspanungswerkzeug nach einem der vorangehenden Ansprüche, wobei die mittlere Korngröße des Wolframkarbids 0,15 µm - 0,9 µm beträgt.

4. Zerspanungswerkzeug nach einem der vorangehenden Ansprüche, wobei das Hartmetall (4) ferner einen Cr-Gehalt im Bereich von 0 - 7,5 Gew.-% des (Co + Ru)-Gehalts aufweist, bevorzugt von 2 - 7,5 Gew.-%.

5. Zerspanungswerkzeug nach Anspruch 4, wobei der Cr-Gehalt kleiner als der Ru-Gehalt ist, bevorzugt weniger als die Hälfte des Ru-Gehalts beträgt.

6. Zerspanungswerkzeug nach einem der vorangehenden Ansprüche, wobei der Ru-Gehalt 8-14 Gew.-% des (Co + Ru)-Gehalts beträgt.

7. Zerspanungswerkzeug nach einem der vorangehenden Ansprüche, wobei der Gehalt von Ti, Ta und/oder Nb je von 0-0,15 Gew.-% beträgt.

8. Zerspanungswerkzeug nach einem der vorangehenden Ansprüche, wobei der Gesamtgehalt von (Ti + Ta + Nb) 0 - 0,2 Gew.-% des Hartmetalls beträgt, bevorzugt 0 - 0,15 Gew.-%.

9. Zerspanungswerkzeug nach einem der vorangehenden Ansprüche, wobei das Hartmetall (4) einen WC-Gehalt im Bereich von 80 - 95 Gew.-% aufweist.

10. Zerspanungswerkzeug nach einem der vorangehenden Ansprüche, wobei das Grundmaterial ferner mit einer CVD- oder PVD-Hartstoffbeschichtung versehen ist.

11. Zerspanungswerkzeug nach einem der vorangehenden Ansprüche, das als ein Vollhartmetallwerkzeug mit einem einstückig mit einem Schaft (2) ausgebildeten Schneidenbereich (3) ausgebildet ist.

12. Verwendung eines Hartmetalls (4) für ein Zerspanungswerkzeug (1; 100),
wobei das Hartmetall (4) in einen duktilen metallischen Binder (5) eingebettete Hartstoffteilchen (6) aufweist, wobei der metallische Binder (5) eine Co-Ru-Legierung ist,
die Hartstoffteilchen (6) zumindest überwiegend durch Wolframkarbid gebildet sind, mit einer mittleren Korngröße des Wolframkarbid von 0,1 - 1,2 µm gemessen als "linear intercept length" gemäß dem internationalen Standard ISO 4499-2:2008(E),
mit einem Mo-Gehalt im Bereich von 0,1 - 3,0 Gew.-% des Hartmetalls, einem Gehalt von Ti, Ta und/oder Nb von je < 0,2 Gew.-% des Hartmetalls, bevorzugt je < 0,15 Gew.-%, und
einem V-Gehalt von < 0,3 Gew.-% des Hartmetalls, bevorzugt < 0,2 Gew.-%,
**gekennzeichnet durch** eine Verwendung für ein Zerspanungswerkzeug für Metall enthaltende Werkstoffe,
einen (Co + Ru)-Gehalt von 5-17 Gew.-% des Hartmetalls und einen Ru-Gehalt von 6-16 Gew.-% des (Co + Ru)-Gehalts.

13. Verwendung nach Anspruch 12, wobei das Hartmetall (4) einen Cr-Gehalt von 2-7,5 Gew.-% des (Co + Ru)-Gehalts aufweist.

## Claims

1. A cutting machining tool (1; 100), comprising a base material composed of cemented hard material (4) which comprises hard material particles (6) embedded in a ductile metallic binder (5), wherein the metallic binder (5) is a Co-Ru alloy, the hard material particles (6) are at least predominantly formed by tungsten carbide, having an average grain size of the tungsten carbide of 0.1 - 1.2 µm measured as "linear intercept length", in accordance with the international standard ISO 4499-2:2008(E),
with an Mo content in the range 0.1 - 3.0% by weight of the cemented hard material,
a content of Ti, Ta and/or Nb of in each case < 0.2% by weight of the cemented hard material, and
a V content of < 0.3% by weight of the cemented hard material, preferably < 0.2% by weight
**characterized in that** it is a cutting machining tool for metal-containing materials and comprises a (Co + Ru) content of 5-17% by weight of the cemented hard material and an Ru content of 6-16% by weight of the (Co + Ru) content.

2. The cutting machining tool as claimed in claim 1, wherein the cemented hard material (4) has an Mo content in the range 0.15 - 2.5% by weight of the cemented hard material.

3. The cutting machining tool as claimed in any of the preceding claims,
wherein the average grain size of the tungsten carbide is 0.15 µm - 0.9 µm.

4. The cutting machining tool as claimed in any of the preceding claims,
wherein the cemented hard material (4) additionally has a Cr content in the range 0 - 7.5% by weight of the (Co + Ru) content, preferably 2 - 7.5% by weight.

5. The cutting machining tool as claimed in claim 4, wherein the Cr content is less than the Ru content, preferably less than half of the Ru content.

6. The cutting machining tool as claimed in any of the preceding claims,
wherein the Ru content is 8-14% by weight of the (Co + Ru) content.

7. The cutting machining tool as claimed in any of the preceding claims,
wherein the content of Ti, Ta and/or Nb is in each case 0 - 0.15% by weight.

8. The cutting machining tool as claimed in any of the preceding claims,
wherein the total content of (Ti + Ta + Nb) is 0 - 0.2% by weight of the cemented hard material, preferably 0 - 0.15% by weight.

9. The cutting machining tool as claimed in any of the preceding claims,
wherein the cemented hard material (4) has a WC content in the range 80 - 95% by weight.

10. The cutting machining tool as claimed in any of the preceding claims,
wherein the base material is additionally provided with a CVD or PVD hard material coating.

11. The cutting machining tool as claimed in any of the preceding claims
which is configured as a solid cemented hard material tool having a cutting region (3) formed in one piece with a shaft (2).

12. The use of a cemented hard material (4) for a cutting machining tool (1; 100),
wherein the cemented hard material (4) comprises hard material particles (6) embedded in a ductile metallic binder (5) and
the metallic binder (5) is a Co-Ru alloy,
the hard material particles (6) are formed at least predominantly by tungsten carbide, having an average grain size of the tungsten carbide of 0.1 - 1.2 µm measured as "linear intercept length", in accordance with the international standard ISO 4499-2:2008(E),
with an Mo content in the range 0.1 - 3.0% by weight of the cemented hard material,
a content of Ti, Ta and/or Nb of in each case < 0.2% by weight of the cemented hard material, preferably in each case < 0.15% by weight, and a V content of < 0.3% by weight of the cemented hard material, preferably < 0.2% by weight,
**characterized by** the use for a cutting machining tool for metal-containing materials,
a (Co + Ru) content of 5-17% by weight of the cemented hard material, and an Ru content of 6-16% by weight of the (Co + Ru) content.

13. The use as claimed in claim 12, wherein the cemented hard material (4) has a Cr content of 2 - 7.5% by weight of the (Co + Ru) content.

## Revendications

1. Outil d'usinage par enlèvement de copeaux (1 ; 100), présentant un matériau de base en métal dur (4), qui présente des particules dures (6) incorporées dans un liant métallique ductile (5),
le liant métallique (5) étant un alliage de Co-Ru,
les particules dures (6) étant constituées au moins principalement par du carbure de tungstène, présentant une grosseur moyenne de grain du carbure de tungstène de 0,1-1,2 µm, mesurée en tant que "linear intercept length" (longueur d'interception linéaire) selon la norme internationale ISO 4499-2:2008(E),
présentant une teneur en Mo dans la plage de 0,1-3,0% en poids du métal dur,
une teneur en Ti, en Ta et/ou en Nb à chaque fois < 0,2% en poids du métal dur et
une teneur en V < 0,3% en poids du métal dur, de préférence < 0,2% en poids,
**caractérisé en ce qu'**il s'agit d'un outil d'usinage par enlèvement de copeaux pour des matériaux contenant du métal et
il présente une teneur en (Co + Ru) de 5-17% en poids du métal dur ainsi qu'une teneur en Ru de 6-16% en poids de la teneur en (Co + Ru).

2. Outil d'usinage par enlèvement de copeaux selon la revendication 1, le métal dur (4) présentant une teneur en Mo dans la plage de 0,15-2,5% en poids du métal dur.

3. Outil d'usinage par enlèvement de copeaux selon l'une quelconque des revendications précédentes, la grosseur moyenne de grain du carbure de tungstène étant de 0,15 µm-0,9 µm.

4. Outil d'usinage par enlèvement de copeaux selon l'une quelconque des revendications précédentes, le métal dur (4) présentant en outre une teneur en Cr dans la plage de 0-7,5% en poids de la teneur en (Co + Ru), de préférence de 2-7,5% en poids.

5. Outil d'usinage par enlèvement de copeaux selon la revendication 4, la teneur en Cr étant inférieure à la teneur en Ru, de préférence inférieure à la moitié de la teneur en Ru.

6. Outil d'usinage par enlèvement de copeaux selon l'une quelconque des revendications précédentes, la teneur en Ru représentant 8-14% en poids de la teneur en (Co + Ru).

7. Outil d'usinage par enlèvement de copeaux selon l'une quelconque des revendications précédentes, la teneur en Ti, en Ta et/ou en Nb étant à chaque fois de 0-0,15% en poids.

8. Outil d'usinage par enlèvement de copeaux selon l'une quelconque des revendications précédentes, la teneur totale en (Ti + Ta + Nb) représentant 0-0,2% en poids du métal dur, de préférence de 0-0,15% en poids.

9. Outil d'usinage par enlèvement de copeaux selon l'une quelconque des revendications précédentes, le métal dur (4) présentant une teneur en WC dans la plage de 80-95% en poids.

10. Outil d'usinage par enlèvement de copeaux selon l'une quelconque des revendications précédentes, le matériau de base étant en outre pourvu d'un revêtement en matériau dur par CVD (dépôt chimique en phase vapeur) ou par PVD (dépôt physique en phase vapeur).

11. Outil d'usinage par enlèvement de copeaux selon l'une quelconque des revendications précédentes, qui est conçu comme un outil entièrement en métal dur pourvu d'une zone de coupe (3) conçue d'un seul tenant avec un corps d'outil (2).

12. Utilisation d'un métal dur (4) pour un outil d'usinage par enlèvement de copeaux (1 ; 100),
le métal dur (4) présentant des particules dures (6) incorporées dans un liant métallique ductile (5),
le liant métallique (5) étant un alliage de Co-Ru,
les particules dures (6) étant constituées au moins principalement par du carbure de tungstène, présentant une grosseur moyenne de grain du carbure de tungstène de 0,1-1,2 µm, mesurée en tant que "linear intercept length" (longueur d'interception linéaire) selon la norme internationale ISO 4499-2:2008(E),
présentant une teneur en Mo dans la plage de 0,1-3,0% en poids du métal dur,
une teneur en Ti, en Ta et/ou en Nb à chaque fois < 0,2% en poids du métal dur, de préférence à chaque fois < 0,15% en poids et
une teneur en V < 0,3% en poids du métal dur, de préférence < 0,2% en poids,
**caractérisée par** une utilisation pour un outil d'usinage par enlèvement de copeaux pour des matériaux contenant du métal,
une teneur en (Co + Ru) de 5-17% en poids du métal dur et une teneur en Ru de 6-16% en poids de la teneur en (Co + Ru) .

13. Utilisation selon la revendication 12, le métal dur (4) présentant une teneur en Cr de 2-7,5% en poids de la teneur en (Co + Ru).
